# EUROPEAN PATENT APPLICATION

(11) **EP 4 300 852 A1**
(43) Date of publication of application: **03.01.2024**
(21) Application number: 22181277.9
(22) Date of filing: 27.06.2022
(51) Int. Cl.: H04H 20/55, H04W 4/40, G08G 1/09

(54) **METHOD AND DEVICE FOR CHANGING THE TRANSMISSION OF AN ITS MESSAGE**

(71) Applicant: DENSO CORPORATION, Kariya-city, Aichi-pref., 448-8661 (JP)
(72) Inventor: LEINMÜLLER, Tim, 85386 Eching (DE); MITTAL, Prachi, 85386 Eching (DE)
(74) Representative: Winter, Brandl - Partnerschaft mbB

(57) **Abstract**

The present invention relates to a method and a device for temporarily changing the traffic profile of an ITS message, wherein the traffic profile contains at least one of traffic class, traffic priority, transmission power and repetition rate, wherein the method comprises the steps of detecting an upcoming situation in which a traffic profile with higher priority is more beneficial than the current traffic profile, determining the relevant ITS messages and the required traffic profile based on the detected upcoming situation, and informing the relevant ITS layers about the determined required traffic profile for the ITS message.

## Description

### Technical field

### Prior art

A known cooperative intelligent transport system (C-ITS) comprises of stations (e.g., vehicles and/or roadside units) that exchange information with each other using (direct) wireless communication, known as vehicle-to-x, or vehicle-to-everything, (V2X) (direct).

V2X is a generic term for road traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and road traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving road traffic safety and optimizing road traffic flow.

The ITS stations (ITS-Ss) in the C-ITS share CAMs (Cooperative Awareness Messages (CAMs) to inform each other about their own position, kinematics, and other data. The ITS stations use DENMs (Decentralized Environmental Notification Messages) to inform each other on dedicated events, such as hard braking or obstacles on the road.

Another V2X message is the Collective Perception Message (CPM) that contains information about on-board sensors, such as field-of-views (FOVs), free-space, and the objects detected within the road traffic environment by the on-board sensors of an ITS-S. CPMs are sent out periodically and contain information on one or more detected objects, field-of-views and other characteristics of vehicle on-board sensors such as e.g., a radar, a camera and the like. CPMs are composed by the Collective Perception Service (CPS) within the facility layer of the ETSI ITS stack and are composed and transmitted as per CPM generation rules of CPS. In C-ITS, a concept of Decentralized Congestion Control (DCC) is employed to handle a congested channel. DCC operates at all layers of the ETSI ITS stack.

ITS messages are assigned specific priorities, e.g. in the form of traffic classes, which determine the precedence of a particular message over others when being transmitted on the channel, their repetition rate is compared to other messages, specifically when the channel is congested. This is specified as part of the decentralized congestion control (DCC) framework in ETSI TS 103 175.

The document "Exploration of Adaptive Beaconing for Efficient Inter-vehicle Safety Communication" of Rober K. Schmidt, Tim Leinmüller, Elmar Schoch, Frank Kargl and Günter Schafer, IEEE Network January/February 2010 describes a method for making future inter-vehicle communication during driving safer, easier and more comfortable by adapting the beacon rate according to the road traffic situation. More specifically, when vehicles detect a dangerous situation, these few vehicles temporarily increase their beacon rate.

### Summary of the invention

### Technical Problem

The object of the present invention is to optimize the use of an ITS station and to reduce the occurrence of safety critical situations

### Solution to the Problem

This object is solved by the subject matter of claims 1, 4 5, and 7. Further aspects are defined in the subclaims.

According to a first aspect of the present invention, a method for temporarily changing the traffic profile of an ITS (Intelligent Transportation System) message for cooperative safety and/or road traffic efficiency applications is provided, wherein the traffic profile contains at least one of traffic class, traffic priority, transmission power and repetition rate, wherein the method comprises the steps of detecting an upcoming situation in which a traffic profile with higher priority is more beneficial for efficiently using a cooperative safety and/or road traffic efficiency application than the current traffic profile, determining the relevant ITS messages and the required traffic profile based on the detected upcoming situation, and informing the relevant ITS layers about the determined required traffic profile for the ITS message.

The understanding of a "traffic profile with higher priority is more beneficial for efficiently using a cooperative safety and/or road traffic efficiency application" might also include that, with the current traffic profile, the application cannot be used or the application can only be used in a restricted way. Moreover, it might be that a specific application requires a minimum number of CAMs/CPMs since otherwise, this specific application is not available. According to a preferred implementation of the present invention, in dependence on the upcoming situation, the used application and the requirements for that application the required messages and repetition rates are determined. In dependence on the DCC limits per message type (of a certain traffic profile) the DDC limits are adapted in view of the required message types.

According to a second aspect of the present invention, which depends on the first aspect, the upcoming situation includes at least one of start of a new safety-critical application, approaching a risk-prone area in relation to other vehicles, approaching a risk-prone area in relation to vulnerable road users, start of an "On-duty" role of a vehicle, which necessitates a higher priority, actively coordinating vehicle driving manoeuvres.

According to a third aspect of the present invention, which depends on at least one of the first and second aspects, in the step of detecting an upcoming situation a first ITS station detects the upcoming situation, wherein in the step of informing the relevant ITS layers this first ITS station informs a further ITS station on the determined required traffic profile for the ITS message, and wherein after the step of informing the relevant ITS layers, the following step is executed: transmitting the at least one message from the first ITS station to the further ITS station.

According to a fourth aspect of the present invention, which depends on the third aspect, after the step transmitting the at least one message it is determined whether the upcoming situation, which has triggered a change in the traffic profile, is resolved or is ended and in the case that the upcoming situation has been resolved or has been ended, the traffic profile is reversed to the traffic profile prior to the upcoming situation.

According to a fifth aspect of the present invention, a device for temporarily changing the traffic profile of an ITS message is provided, which comprises means for carrying out the steps of the method of one of the preceding aspects.

According to a sixth aspect of the present invention, a device computer program product is provided, which comprises instructions, which, when the program is executed by a computer, cause the computer to carry out the steps of the method of one of the first to fourth aspects.

According to a seventh aspect of the present invention, a computer-readable storage medium is provided, which comprises instructions which, when executed by a computer, cause the computer to carry out the steps of the method of one of the first to fourth aspects.

### Brief Description of the Drawings

Hereinafter, the present invention is described more in detail with reference to the drawings and the corresponding detailed description, wherein:
Fig. 1 illustrating the ETSI ITS-Stack and CPS in a CPS-centric view,
FIG. 2 illustrates a decentralized congestion control (DCC) architecture that is used in the ITS system of FIG.1 and applicable to the present invention.
Fig. 3 shows the functions of CPS,
Fig. 4 illustrates the steps as one example when using the present invention and
Fig. 5A through 5D show the position of respective vehicles in an example for the use of the present inventor for lane merging.

### Description of the Embodiment

As mentioned at the outset, V2X is a generic term for road traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and road traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving road traffic safety and optimizing road traffic flow.

Two alternative access layer technologies for ITS have been defined by the Institute of Electrical and Electronics Engineers (IEEE) and the Third Generation Partnership Project (3GPP), respectively.

The first approach is often referred to as Dedicated Short-Range Communication (DSRC), which supports vehicular ad-hoc connectivity using Wireless Local Area Network (WLAN) technologies standardized as IEEE 802.11p, which is the basis for the European standard ETSI ITS-G5. The second approach is Cellular-based V2X (C-V2X), a proposal by the 3GPP, based on Long-Term Evolution (LTE), also known as LTE-V2X or sidelink.

In this context, cooperative awareness within road road traffic means that road users and roadside infrastructure are informed about each other's position, dynamics and attributes. Road users are all kind of users on or near the road that play a role in road traffic safety and control, such as cars, trucks, motorcycles, bicycles or even pedestrians and roadside infrastructure equipment including road signs, road traffic lights or barriers and gates. The awareness of each other is the basis for several road safety and road traffic efficiency applications with many use cases as described in ETSI TR 102 638. It is achieved by regular broadcasting of information among the road users, from vehicle to vehicle (V2V), but also from infrastructure to any road user, V2I, I2V or X2X based on wireless networks, called V2X network and as such is part of Intelligent Transport Systems (ITS).

Cooperative safety and road traffic efficiency applications require Intelligent Transportation System (ITS) sub-systems (road users, roadside units, etc.) and their ITS-Stations (ITS-Ss) to develop situational awareness that includes the presence and behavior of road users in their vicinity. Vehicle sub-systems and roadside sub-systems develop their situational awareness from their perception sensors and through communication with other surrounding ITS-Ss. The CA basic service EN 302 637-2, is a European Norm (EN) that specifies how an ITS-S can inform others about its associated sub-systems position, dynamics and attributes by sending Cooperative Awareness Messages (CAMs) according to EN 302 637-2.

The Collective Perception service (CP service or CPS) complements the CA basic service. The CPS specification defines how an ITS-S can inform others about the position, dynamics and attributes of neighboring road users, other objects, and free-space detected by local perception sensors. The CPS enables ITS sub-systems to share information about other road users and obstacles that were detected by local perception sensors such as radars, cameras and the like. In that sense, it aims at increasing awareness between ITS sub-systems by mutually contributing information about their perceived objects to the individual knowledge base of the sub-system.

The Collective Perception Message (CPM) enables sharing of information about detected objects by the disseminating ITS sub-system. The message consists of information about the disseminating ITS sub-system, its sensory capabilities and its detected objects. For this purpose, the message provides generic data elements to describe detected objects in the reference frame of the disseminating ITS sub-system. The CPM is transmitted cyclically with adaptive message generation rates to decrease the resulting channel load while focusing on reporting changes in the dynamic road environment.

In particular, draft ETSI Technical Specification ETSI TS 103 324, currently in the form of V0.0.22 draft (2021-05), focuses on the specifications of CPMs transmitted by ITS-Ss participating in the V2X network and the specification of the CPS with trigger conditions for sending CPMs.

As used herein, an object in the context of the CPS is defined as the state space representation of a physically detected object within a sensor's perception range, an object list is defined as a collection of objects temporally aligned to the same timestamp, the Collective Perception (CP) Service is defined as a facility at the ITS-S facilities layer to generate, receive and process CPMs, the Collective Perception Message (CPM) is defined as a CP service PDU (Protocol Data Unit), Collective Perception Message (CPM) data is defined as a partial or complete CPM payload, the Collective Perception (CPM) protocol is defined as the ITS facilities layer protocol for the operation of the CPM transmission and reception, an ITS station is defined as a functional entity specified by the ITS station (ITS-S) reference architecture, an Object confidence is defined as a quantification of the confidence that a detected object actually exists, i.e., has been detected previously and has continuously been detected by a sensor, a Roadside ITS station is defined as an ITS station in a roadside ITS sub-system, a Sensor Measurement is defined as the operation of a sensor based on its working principle to generate a state space representation for detected objects, a State Space Representation is defined as the mathematical description of a detected object consisting of state variables such as distance, speed, object dimensions, etc., and a Vehicle ITS station is defined as an ITS station in a vehicular ITS sub-system. CPU(s) in an ITS-S carry out the respective layer functions, namely application layer, facilities layer, and network and transport layer.

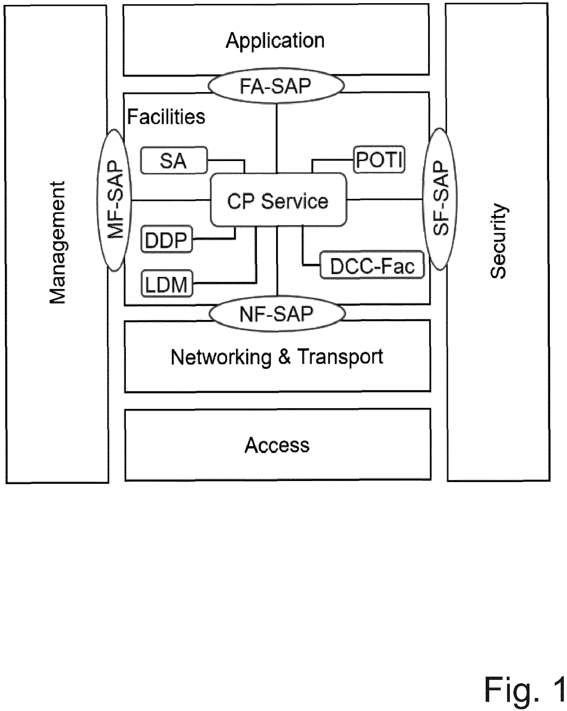

Fig. 1 depicts the Collective Perception (CP) service within the ITS-S architecture along with the logical interfaces to other layers and entities within the Facilities layer. The CPS is a Facilities layer entity in the ITS-S-S architecture. It interfaces with other entities of the Facilities layer and with ITS applications to collect relevant information for CPM generation and for forwarding received CPM content for further processing.

The entities for the collection of data to generate a CPM are the Device Data Provider (DDP), the Position and Time management (POTI) and the Local Dynamic Map (LDM). For vehicle ITS sub-systems, the DDP is connected with the in-vehicle network and provides the vehicle state information. For roadside ITS sub-systems, the DDP is connected to sensors mounted on the roadside infrastructure such as poles or gantries. The POTI entity provides the position of the ITS-S and time information. The LDM is a database in the ITS-S, which in addition to on-board sensor data is configured to be updated with received data from message such as CAM and CPM. ITS applications retrieve information from the LDM for further processing. The CPS also interfaces with the Service Announcement (SA) Service to indicate an ITS-S's ability to generate CPMs and to provide details about the communication technology/ies used.

Message dissemination-specific information related to the current channel utilization are received by interfacing with the DCC-FAC (Decentralized Congestion Control for Facility Layer) entity and the DCC-Cross entity (located in the Management plane, not shown in Fig.1). The CPS interfaces through the NF-SAP (SAP for Networking-Facility layer interface) with the networking & transport layer (N&T) for exchanging of CPMs with other ITS-Ss, the SF-SAP (SAP for Security-Facility layer interface) with the Security entity to access security services for CPM transmission and CPM reception, the MF-SAP (SAP for Management-Facility layer interface) with the Management entity and the FA-SAP (SAP for Facility-Application layer interface) with the application layer if received CPM data is provided directly to the applications. It is noted that SAP stands for Service Access Point, and that SA stands for Service Announcement.

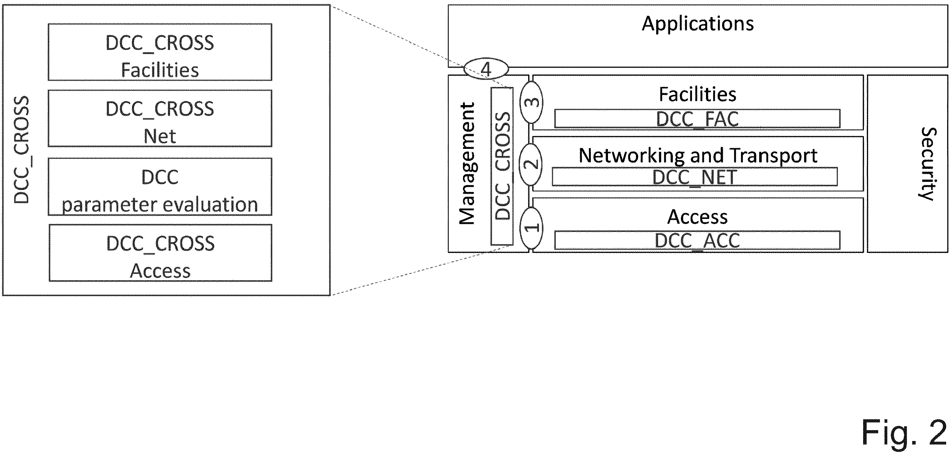

FIG. 2 illustrates an exemplary DCC architecture to which the present invention is applicable.

This architecture corresponds to the one defined in ETSI TS 103 175 V1.1.1 (2015-06) and ETSI TS 103 141 V0.1.6 (2021-03) (which are incorporated herein by reference), and includes a DCC facilities layer entity (DCC_FAC) located in the facilities layer, a DCC network layer entity (DCC_NET) located in the network & transport layer, a DCC access layer entity (DCC_ACC) located in the access layer, and a DCC management entity (DCC_CROSS) located in the management layer. Entities (components) may be connected through respective DCC interfaces (interfaces 1 to 4). Please note that conventionally the interface 4 is not considered and not yet specified.

DCC_FAC may include at least one of the following DCC functions:
Controlling a load generated by messages (e.g., CAM, DENM, other messages) on the radio channel(s): This load is controlled by an indication provided to a basic facilities service or an application that generates the message.
Potential triggering of channel switching
Mapping of a message priority set by the basic facilities service or an application to a traffic class field of the message.

In particular, DCC_FAC (together with the corresponding functionality DCC_CROSS_Facilities in DCC_CROSS) may control the load generated by each application or service at the time of generating the message such as CAM. To do so, DCC_FAC may consider available channel resources of the ITS-station from DCC_CROSS and message generation requirements from the services / the applications. For example, DCC_FAC may acquire an available CBR per radio channel from DCC_CROSS, acquire a message size and a message interval from each service or application, and calculate a proposed minimum interval that is transferred to DCC_CROSS_Facilities, which in turn provides it to the respective services or applications.

DCC_NET may include at least one of the following DCC functions:
Storing CBR values received from other ITS stations in direct radio communication range and evaluating them to forward the global CBR (usually determined as the maximum CBR experienced by any of the ITS stations in direct communication range, including the own station's CBR) to the DCC_CROSS
Disseminating a local DCC parameter to a neighboring ITS station by inserting a value into a GN header

DCC_ACC may include at least one of the following DCC functions:
CBR evaluation: Deriving a local CBR from a measured channel load (CL), for each of the radio channels used by the ITS station
DCC prioritization: Selecting a DCC queue where to deliver the message according to a traffic class (TC) indicated in the message. If using ITS-G5/DSRC, a TC corresponding to a highest EDCA (Enhanced Distributed Channel Access - according to IEEE 802.11e) access class is mapped to a DCC queue having a highest priority and dequeued by a DCC flow control first.

DCC queue: Temporarily storing a transmit (Tx) message before transmission. When the radio channel is busy, the message is queued. If a queuing time exceeds a message lifetime, the message is dropped.
DCC power control: Determining transmit (Tx) power associated with the message based on information provided by DCC_CROSS
DCC flow control: Performing traffic shaping based on parameters provided by DCC_CROSS_Access
DCC gatekeeper: combining DCC prioritization, DCC queues, DCC flow and DCC power control to enforce channel utilization limits provided by DCC

As shown in FIG.2, DCC_CROSS, for a cross-layer operation of the DCC mechanism, may include at least one of the following DCC functions:
DCC parameter evaluation: Computing internal DCC parameters indicating the available channel resources based on CBR values collected by a CBR evaluation function (local CBR) and received by DCC_NET (highest global CBR value). Providing the ITS stations global DCC TX parameters to DDC_NET.
DCC_CROSS_Acess: Determining DCC flow control and DCC power control parameters for each used radio channel based on the internal DCC parameters computed by the DCC parameter evaluation function and providing the determined parameters to the DCC_ACC entity
DCC_CROSS_Net: Returning to DCC_NET the available resources per radio channel.
DCC_CROSS_Facilities: Using the internal DCC parameters from the DCC parameter evaluation function to determine the available channel resource limit for the registered applications and the facilities services. This value is either provided to the DCC_FAC entity, or to the applications and facilities services directly.

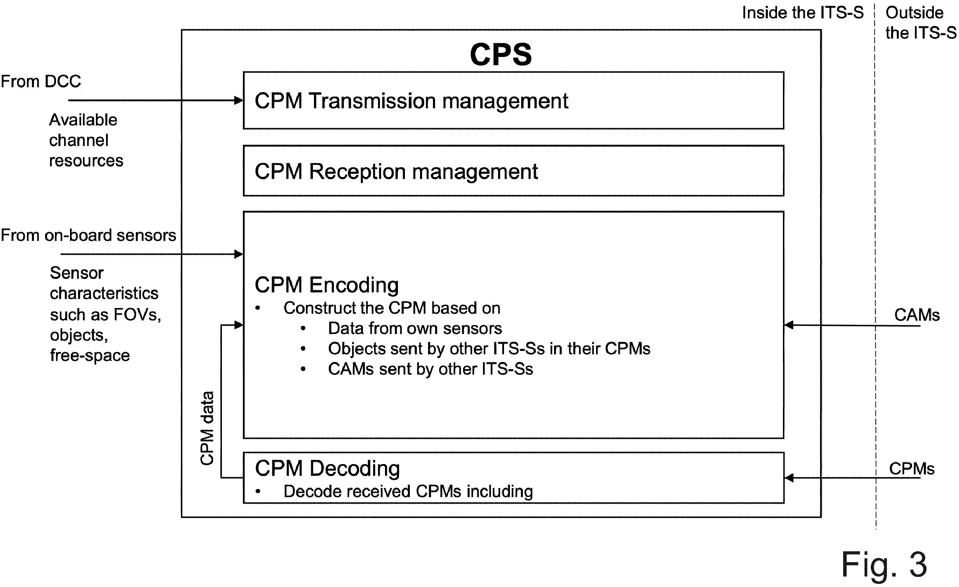

As shown in Fig. 3, the CPS functions in a respective ITS-S encompass CPM transmission management, CPM reception management, CPM encoding and CPM decoding based on input from the DCC (including e.g. information about available channel resources), from on-board sensors (including e.g. information about sensor characteristics, FOVs, objects, free-space), CAMs and CPMs (from outside the respective ITS-S, e.g. from one or more other ITS-Ss).

In other words, C-ITS) comprises stations, like for instance vehicles, that exchange information with each other using direct wireless communication via V2X communication, wherein various messages, such as CAMs (Cooperative Awareness Messages), DENMs (Decentralized Environmental Notification Messages), VAMs (VRU Awareness Messages), are shared. It is also possible to share other messages, such as MCMs (Maneuver Coordination Messages).

This sharing of information is governed, for instance, by the following standards:
- ETSI TS 102 636-4-2 V1.1.1 (2013-10) as an example for traffic class assignment for various ITS messages specifically for ITS G5 technology,
- ETSI EN 302 636-5-1 V2.1.0 (2017-05) according to which the traffic class field in an ITS message is populated by the generating entity (facility / service / application) and the lower layers are informed of the traffic class through inter-layer interface,
- ITS messages are generated as per specific rules for generation, wherein those for ex - CAM are defined in ETSI EN 302 637-2 (2014-09) and those for VAM in ETSI TS 103 300-3 V2.1.2 (2021-04).

The priorities of ITS messages are fixed during the operation of an ITS-S, resulting in a fixed scheme for assigning traffic profile, e.g. priority, transmission etc, to a certain message.

Moreover, the inventor of the present invention have found out that there is no situation-based or manoeuvre-based adaptation of message priorities. This means that even when an ITS message is temporarily more critical, e.g. due to an upcoming situation, such as start of a manoeuvre by an ITS-S that could be a safety hazard to others, this ITS message will still be transmitted with its fixed assigned priorities and might not even be transmitted at all due to the presence of another higher priority message.

For example, a situation might occur in which an evasive manoeuvre might require 10Hz CAMs plus additional MCMs from involved vehicles. However, in high channel load situations DCC will limit the CAM output of the vehicles, especially if higher priority MCMs are send as well. This might result in a non-optimal use of the ITS. Moreover, safety critical situations might not be prevented, while in the case of transmittance an avoidance of that safety critical situation would be possible.

The inventors of the present invention have found out that this situation can be improved by applying the following approach: In dependence on the upcoming situation, like the start of a new manoeuvre, or approaching to a high-risk area, an ITS-S is reconfigured so that
a) an ITS message is or ITS messages are temporarily assigned a higher priority, to allow a transmission at higher precedence, higher power and/or higher repetition rate, i.e. a higher "traffic profile". Valid reasons for assigning a higher traffic class include the dedicated need of a driving safety related application, which is either triggered by the above mentioned manoeuvre or by approaching to the high-risk area,
b) an ITS message is or ITS messages are generated accordingly, wherein the message generation rules in the corresponding facility are adapted,
c) Appropriate ITS layers are informed about the required traffic profile for the ITS message.

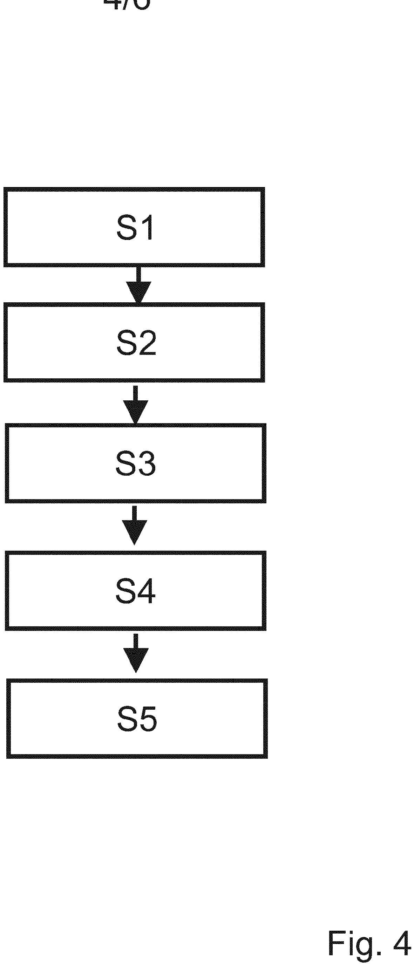

More specifically, this might be implemented by the following steps, which are shown in Fig. 4:
In step S1, an upcoming change in the state of an application, e.g. start of a new manoeuvre coordination application, is detected.

According to step S2, a determination of concerned parameters takes place based on the requirements of the application, e.g. based on the type or the duration of the manoeuvre. This might include the affected messages, e.g. Manoeuvre Coordination Message, CAMs, the time point of the switching of the traffic profile, the duration of the switching of the traffic profile and traffic profile parameters, e.g. the required higher traffic class, repetition rate etc.

In step S3, a preparation process takes place in which these parameters are communicated to the respective entity that is responsible for generating the message(s), if needed, through the inter-layer interfaces, e.g. through CA basic service facility for CAMs as well as to the management layer, e.g. through the "Communication Manager" entity.

In step S4, the generation and/or transmission of the message(s) in question by the responsible entity according to the new parameters takes place.

In step S5, a reversal to the old traffic profile is affected when the situation is resolved or when the situation has ended.

Preferred use cases for the above approach and the above steps are now defined.

Preferred use cases for vehicles, for which examples of relevant ITS messages are CAM, MCM, can be the start of a new safety-critical application, e.g. the start of a lane change, the approach to a risk-prone area, e.g. an intersection.

A further use case relates to special vehicles only, wherein examples of relevant ITS messages are CAM, DENM. In this use, the start of "on-duty" role might be decisive, like e.g. an ambulance which is about to start transporting a patient.

In relation to vulnerable road users (VRUs) and the corresponding ITS messages VAM (VRU Awareness Message) the use case might be the approach to a risk-prone area, e.g. pedestrian crossing.

When implementing a use case considering the above approach and the above steps, the following considerations are helpful:
With respect to the Detection in step S1, the following circumstances could be clarified: What are the parameters and thresholds for these parameters that are used to calculate the upcoming changes, which are the so-called "triggering conditions"? It should be uniformly agreed upon among all ITS-Ss what type of changes constitute "high priority", possibly in the form of "application profile", e.g. C2C-CC BSP - Basic System Profile. Is the priority from the type of a simple 0 or 1 or are there multiple levels of priority, e.g. for ITS-G5, where there are 4 priority levels of these changes, each mapped to one traffic class of IEEE 802.11.

With respect to the Determination of Parameters in step S2, the following circumstances could be clarified: Every application implementation should know what type of transmission requirements are needed for which change, possibly in the form of "application profile" again, e.g. C2C-CC BSP; wherein a need for standardization might exist, especially for 'dialogue type applications', such as explicit negotiation type manoeuvre coordination.

When implementing the present invention, this might have an impact also on the following standards: with respect to the generation rules for different services, e.g. CAM, VAM ETSI EN 302 637-2 (2014-09) and ETSI TS 103 300-3 V2.1.2 (2021-04), with respect to interfaces between different layers ETSI EN 302 636-5-1 V2.1.0 (2017-05)).

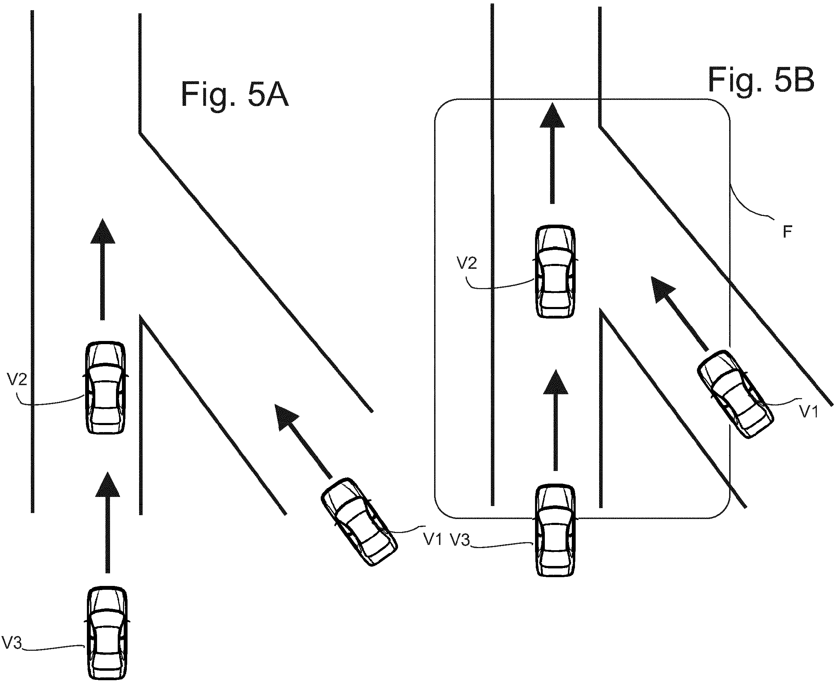

Applying the present invention to a use case is now described with reference to Fig. 5A through 5D, which show the position of respective vehicles in an example of lane merging.

In Fig. 5A, vehicle V1 is driving on an on-ramp to enter a highway on which two vehicles V2 and V3 are driving behind each other. The highway is congested, which results in a "high-load" communication channel so that the CAM transmission rate of all vehicles is restricted in accordance with DCC.

In Fig. 5B, vehicle V1 approaches the lane merging area, which is expressed in Fig. 5B with the frame F. Due to the upcoming lane merging maneuver, vehicle V1 increases the priority of its CAMs and MCMs to allow a transmission with a 10Hz repetition rate. After the priority increase, CA basic service facility and MC service facility create messages at the rate, which is required by the lane merging process.

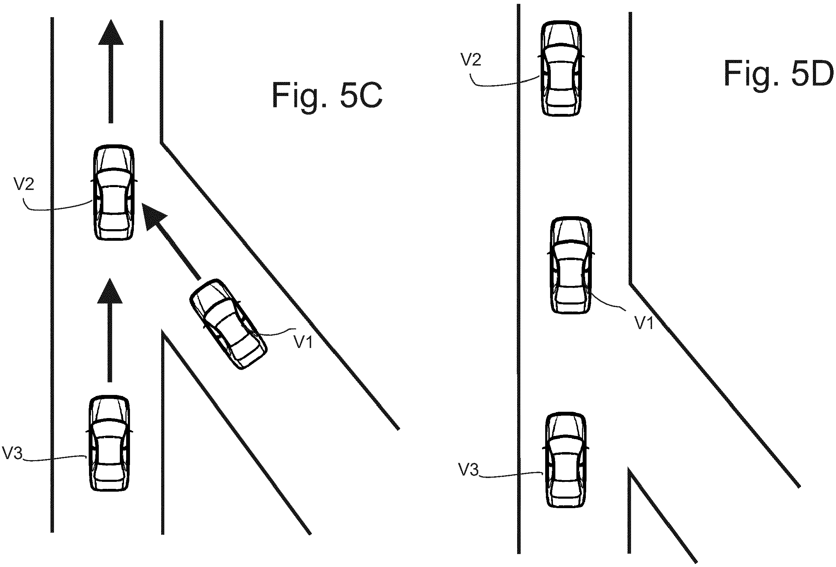

In Fig. 5C, the vehicles V2 and V3 are determined to be the vehicles in-between vehicle V1 will be merged in. In the same manner as vehicle V1, the vehicles V2 and V3 increase the priority of their CAMs and MCMs to allow a transmission with a 10Hz repetition rate. After the priority increase, the CA basic service facility and the MC service facility in the vehicles V2 and V3 also create messages at the rate, which is required by the lane merging process.

After the merging maneuver is completed, which is shown in Fig. 5D, the three vehicles V2, V1, V3, which are now driving behind each other revert their CAM and MCM back to the default priority. The CA basic service facility creates messages at the default rate while the MC service facility is turned off.

As a result, the use of ITS can be optimized the safety critical situation can be better prevented.

## Claims

1. Method for temporarily changing the traffic profile of an ITS (Intelligent Transportation System) message for cooperative safety and/or road traffic efficiency applications, wherein the traffic profile contains at least one of traffic class, traffic priority, transmission power and repetition rate, wherein the method comprises the steps of
- detecting an upcoming situation in which a traffic profile with higher priority is more beneficial for efficiently using a cooperative safety and/or road traffic efficiency application than the current traffic profile,
- determining the relevant ITS messages and the required traffic profile based on the detected upcoming situation, and
- informing the relevant ITS layers about the determined required traffic profile for the ITS message.

2. Method according to claim 1, wherein the upcoming situation includes at least one of
- Start of a new safety-critical application,
- Approaching a risk-prone area in relation to other vehicles,
- Approaching a risk-prone area in relation to vulnerable road users,
- Start of an "On-duty" role of a vehicle, which necessitates a higher priority
- Actively coordinating vehicle driving manoeuvres.

3. Method according to claim 1 or 2,
wherein in the step of detecting an upcoming situation a first ITS station detects the upcoming situation,
wherein in the step of informing the relevant ITS layers this first ITS station informs a further ITS station on the determined required traffic profile for the ITS message, and
wherein after the step of informing the relevant ITS layers, the following step is executed: transmitting the at least one message from the first ITS station to the further ITS station.

4. Method according to claim 3, wherein after the step transmitting the at least one message it is determined whether the upcoming situation, which has triggered a change in the traffic profile, is resolved or is ended and in the case that the upcoming situation has been resolved or has been ended, the traffic profile is reversed to the traffic profile prior to the upcoming situation.

5. Device for temporarily changing the traffic profile of an ITS message comprising means for carrying out the steps of the method of one of the preceding claims.

6. A computer program product comprising instructions, which, when the program is executed by a computer, cause the computer to carry out the steps of the method of one of the claims 1 through 4.

7. A computer-readable storage medium comprising instructions which, when executed by a computer, cause the computer to carry out the steps of the method of one of the claims 1 through 4.

## Amended claims

### Amended claims in accordance with Rule 137(2) EPC.

1. Method for temporarily changing the traffic profile of an ITS (Intelligent Transportation System) message for cooperative safety and/or road traffic efficiency applications, wherein the traffic profile contains at least one of traffic class, traffic priority, transmission power and repetition rate, wherein the method comprises the steps of
- assigning to an ITS message a traffic priority
- detecting an upcoming situation in which a traffic profile with higher priority is more beneficial for efficiently using a cooperative safety and/or road traffic efficiency application than the current traffic profile,
- determining the relevant ITS messages and the required traffic profile based on the detected upcoming situation,
- increasing the priority of one or more ITS message(s), and
- informing the relevant ITS layers about the determined required traffic profile for the ITS message.

2. Method according to claim 1, wherein the upcoming situation includes at least one of
- Start of a new safety-critical application,
- Approaching a risk-prone area in relation to other vehicles,
- Approaching a risk-prone area in relation to vulnerable road users,
- Start of an "On-duty" role of a vehicle, which necessitates a higher priority
- Actively coordinating vehicle driving manoeuvres.

3. Method according to claim 1 or 2,
wherein in the step of detecting an upcoming situation a first ITS station detects the upcoming situation,
wherein in the step of informing the relevant ITS layers this first ITS station informs a further ITS station on the determined required traffic profile for the ITS message, and
wherein after the step of informing the relevant ITS layers, the following step is executed: transmitting the at least one message from the first ITS station to the further ITS station.

4. Method according to claim 3, wherein after the step transmitting the at least one message it is determined whether the upcoming situation, which has triggered a change in the traffic profile, is resolved or is ended and in the case that the upcoming situation has been resolved or has been ended, the traffic profile is reversed to the traffic profile prior to the upcoming situation.

5. Device for temporarily changing the traffic profile of an ITS message comprising means for carrying out the steps of the method of one of the preceding claims.

6. A computer program product comprising instructions, which, when the program is executed by a computer, cause the computer to carry out the steps of the method of one of the claims 1 through 4.

7. A computer-readable storage medium comprising instructions which, when executed by a computer, cause the computer to carry out the steps of the method of one of the claims 1 through 4.
